(19) Europäisches Patentamt
European Patent Office
Office européen des brevets

(11) Veröffentlichungsnummer: **0 281 920 A2**

# (12) EUROPÄISCHE PATENTANMELDUNG

(21) Anmeldenummer: **88103160.3**

(22) Anmeldetag: **02.03.88**

(51) Int. Cl.⁴: **C09B 44/02**, C09B 47/32, D21H 3/80

Ein Antrag gemäss Regel 88 EPÜ auf Berichtigung der Beschreibung liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: **11.03.87 DE 3707715**

(43) Veröffentlichungstag der Anmeldung: **14.09.88 Patentblatt 88/37**

(84) Benannte Vertragsstaaten: **CH DE FR GB IT LI**

(71) Anmelder: **BASF Aktiengesellschaft**
**Carl-Bosch-Strasse 38**
**D-6700 Ludwigshafen(DE)**

(72) Erfinder: **Dehnert, Johannes, Dr.**
**Ottweilerstrasse 2**
**D-6700 Ludwigshafen(DE)**

## (54) Farbstoffe mit N-(2-Aminoethyl)-piperazingruppen und ihre Verwendung.

(57) Farbstoffe der Formel I

$F[(-Y)_q-X]_p\ (A)_{m+n}$ (I),

in der

m und n gleich oder verschieden sind und unabhängig voneinander jeweils 0 oder 1,

p 1 oder 2,

q 0 oder 1,

F einen Farbstoffrest,

X einen Rest der Formel II oder III

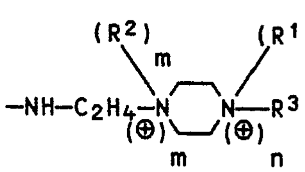

(II)

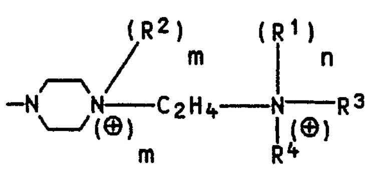

(III),

wobei $R^1$, $R^2$, $R^3$ und $R^4$ gleich oder verschieden sind und unabhängig voneinander jeweils für Wasserstoff, $C_1$-$C_4$-Alkyl oder Benzyl stehen und m und n jeweils die obengenannte Bedeutung besitzen,

Y eine Carbonyl-oder Sulfonylgruppe und

A ein Anion bedeuten, und deren Verwendung zum Färben von Papier.



Xerox Copy Centre

## Farbstoffe mit N-(2-Aminoethyl)piperazingruppen und ihre Verwendung

Die vorliegende Erfindung betrifft Farbstoffe der Formel I

$F[(-Y)_q-X]_p\ (A)_{m+n}$ (I),

in der

m und n gleich oder verschieden sind und unabhängig voneinander jeweils 0 oder 1,

p 1 oder 2,

q 0 oder 1,

F einen Farbstoffrest,

X einen Rest der Formel II oder III

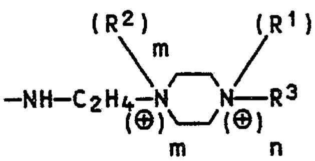

(II)

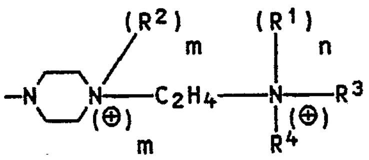

(III),

wobei $R^1$, $R^2$, $R^3$ und $R^4$ gleich oder verschieden sind und unabhängig voneinander jeweils für Wasserstoff, $C_1$-$C_4$-Alkyl oder Benzyl stehen und m und n jeweils die obengenannte Bedeutung besitzen,

Y eine Carbonyl-oder Sulfonylgruppe und

A ein Anion bedeuten.

Der Farbstoffrest F stammt vorwiegend von Azo-, Anthrachinon-oder Phthalocyaninfarbstoffen, wobei Azo-oder Phthalocyaninfarbstoffe bevorzugt sind. Als Azofarbstoffe sind dabei Mono-, Dis-oder Trisazofarbstoffe zu nennen, wobei die Azogruppen der Disazofarbstoffe auch von Tetrazokomponenten stammen können.

Wichtige Diazo-oder Tetrazokomponenten für die genannten Mono-, Dis-oder Trisazofarbstoffe sind z.B. Anilin, Aminoazobenzol, Aminothiophen, Aminobenzthiazol, Diaminodiphenyl, Diaminobenzophenon, Diaminodiphenylsulfon, Diaminodiphenylharnstoff, Diaminoazobenzol oder deren Derivate.

Wichtige Kupplungskomponenten für die genannten Mono-, Dis-oder Trisazofarbstoffe sind z.B. Naphthalin-, Pyrazol-oder Pyridinderivate.

Als Substituenten für die genannten Azofarbstoffe kommen beispielsweise Chlor, Brom, $C_1$-$C_4$-Alkyl, Phenyl, $C_1$-$C_4$-Alkoxy, Phenoxy, Acetylamino, Benzoylamino, Nitro, Cyano, Carboxyl, Methoxycarbonyl, Ethoxycarbonyl, $C_1$-$C_4$-Mono-oder Dialkylcarbamoyl, Sulfamoyl, $C_1$-$C_4$-Mono-oder Dialkylsulfamoyl oder Hydroxysulfonyl in Betracht.

Von besonderer Bedeutung sind Verbindungen der Formel I, in der F einen Azofarbstoffrest bedeutet, bei dem sich die Kupplungskomponente von Pyrazol-5-on-derivaten, 2-Hydroxynaphthalincarbonsäurederivaten oder 2,6-Diamino-3-cyano-4-methylpyridinderivaten ableitet.

Bevorzugte Diazo-oder Tetrazokomponenten sind z. B. 4-Aminoazobenzol, 4-Benzoylaminoanilin, 4-Aminoazobenzol-4′-sulfonsäure, 2-(4-Aminophenyl)-6-methylbenzthiazol, 4′-Chlor-3-methoxy-6-methyl-4-aminoazobenzol, 4-Methyl-3-cyano-2-aminothiophen-5-carbonsäuremethylester, 3,3-Dichlor-4,4′-diaminodiphenyl, 4,4′-Diaminobenzophenon, 4,4′-Diaminodiphenylsulfon, 4,4′-Diaminodiphenylharnstoff oder 4,4′-Diaminoazobenzol.

Die Phthalocyaninfarbstoffe können z. B. noch Chlor, Brom, Sulfamoyl oder Hydroxysulfonyl als Substituenten enthalten.

Bei den Phthalocyaninfarbstoffen leitet sich der Rest F vorzugsweise vom unsubstituierten oder durch eine Hydroxysulfonylgruppe substituierten Kupferphthalocyanin ab.

Die Reste $R^1$, $R^2$, $R^3$ und $R^4$ in Formel I sind beispielsweise Wasserstoff, Methyl, Ethyl, Propyl, Isopropyl, Butyl, Isobutyl, sec-Butyl, tert-Butyl oder Benzyl.

Bevorzugt sind solche Farbstoffe der Formel I, in denen $R^1$, $R^2$, $R^3$ und $R^4$ jeweils Wasserstoff oder

Methyl, insbesondere aber jeweils Wasserstoff bedeuten. Bevorzugt sind weiterhin die Verbindungen der Formel I in denen m und n jeweils 0 bedeuten.

Außerdem werden Farbstoffe der Formel I bevorzugt, in der q 0 oder 1 bedeutet, wobei für den Fall, daß q 1 bedeutet, Y vorzugsweise für eine Carbonylgruppe steht.

Als Anionen A sind anorganische oder organische Anionen, wie Chlorid, Bromid, Nitrat, Phosphat, Sulfat, Hydrogensulfat, Methosulfat, Ethosulfat, Formiat, Acetat, Propionat oder Toluolsulfonat geeignet.

Die Herstellung der erfindungsgemäßen Farbstoffe erfolgt nach an sich bekannten Methoden. So kann man z. B. Farbstoffe in Form ihrer Carbonsäure-oder Sulfonsäurehalogenide oder ihrer Carbonsäureester oder auch entsprechend geeignete Farbstoffvorprodukte (z.B. entsprechend geeignete Diazo-oder Kupplungskomponenten) mit N-(2-Aminoethyl)piperazin der Formel II

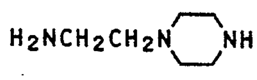 (II)

umsetzen. Danach wird gegebenenfalls protoniert oder alkyliert. Bei der Umsetzung von entsprechend geeigneten Farbstoffvorprodukten mit N-(2-Aminoethyl)piperazin wird zunächst eine Folgereaktion (Azokupplung) angeschlossen, in der der Farbstoff synthetisiert wird. Danach kann ebenfalls protoniert oder alkyliert werden.

Einzelheiten der Herstellung können den Beispielen entnommen werden.

Die Farbstoffe der Formel I eignen sich zum Färben von anionisch modifizierten Fasern, wie Acrylnitrilpolymerisaten, insbesondere aber zum Färben von Papierstoffen. Beim Färben von Papier zeichnen sich die Verbindungen der Formel I dadurch aus, daß sie weitgehend unabhängig von der Struktur praktisch vollständig aus den Färbebädern ausziehen.

Die nachfolgenden Beispiele sollen die Erfindung näher erläutern. Die Angaben über Prozente beziehen sich, sofern nicht anders vermerkt, auf das Gewicht. In allen Beispielen sind dabei die Formeln der Farbstoffe in unprotoniertem Zustand angegeben.

Beispiel 1

Eine Mischung aus 238 g 1-Phenylpyrazol-5-on-3-carbonsäureethylester und 325 g N-(2-Aminoethyl)-piperazin wurde 5 Stunden bei 120 °C im offenen Kolben gerührt. Dann wurden bei 100 °C allmählich 1000 ml Wasser hinzugegeben. Nach Stehen über Nacht wurde das auskristallisierte Reaktionsprodukt der Formel

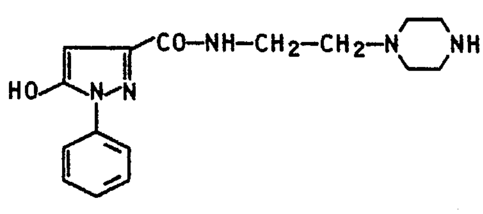

abgesaugt, mit Wasser gewaschen und bei 70 °C unter vermindertem Druck getrocknet.

Beispiel 2

In die aus 20 g 4-Aminoazobenzol durch Diazotierung in an sich bekannter Weise erhaltenen Lösung des Diazoniumsalzes gab man bei 5 -10 °C eine Lösung von 35 g der nach Beispiel 1 erhaltenen Kupplungskomponente in 150 ml Wasser und 15 g Eisessig. Durch allmähliche Zugabe von 55 %iger wäßriger Natriumacetat-Lösung brachte man das Kupplungsgemisch in einen pH-Bereich von 4 - 5. Nach beendeter Kupplung saugte man den entstandenen Farbstoff ab, wusch ihn mit Wasser und trocknete ihn bei 70 °C unter vermindertem Druck. Das so erhaltene orangefarbene Pulver löste sich in Wasser unter Zusatz von Essigsäure. Mit diesen Lösungen wurden farbstarke Orangetöne auf Papier erhalten, wobei die

Abwässer praktisch farblos waren.

Mit der Kupplungskomponente aus Beispiel 1 wurden weitere Farbstoffe analog Beispiel 2 hergestellt. In der folgenden Tabelle 1 sind die jeweiligen Diazokomponenten sowie der Farbton, den man erzielt, wenn man Papier mit dem jeweils resultierenden Farbstoff ausfärbt, angegeben.

Tabelle 1

| Bsp.-Nr. | Diazokomponente | Farbton der Papier-Ausfärbung |
|---|---|---|
| 3 | 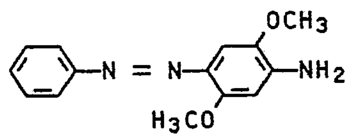 | bordorot |
| 4 | 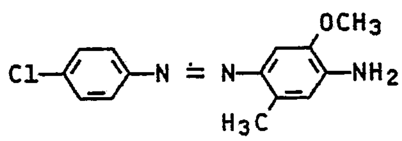 | rot |
| 5 | 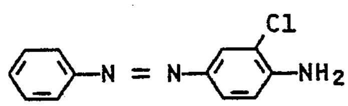 | orange |
| 6 | 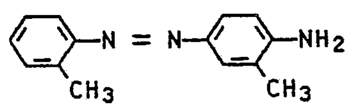 | orange |
| 7 | 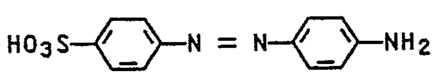 | orange |

Tabelle 1 (Forts.)

| Bsp.-Nr. | Diazokomponente | Farbton der Papier-Ausfärbung |
|---|---|---|
| 8 | 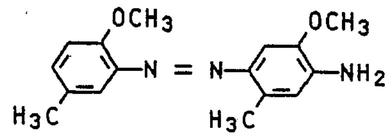 | rot |
| 9 | 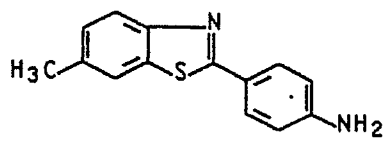 | orange |
| 10 | 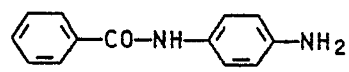 | orangegelb |
| 11 | 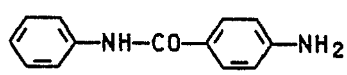 | gelb |
| 12 | 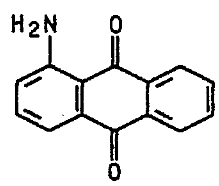 | gelb |
| 13 | 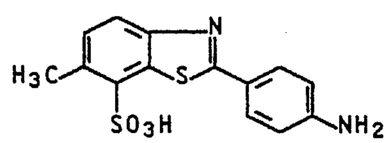 | orange |

Beispiel 14

202 g 2-Hydroxynaphthalin-3-carbonsäuremethylester wurden in 325 g N-(2-Aminoethyl)piperazin eingetragen, wobei die Temperatur von 22 °C auf 58 °C anstieg. Dann erhitzte man diese Mischung im offenen Kolben 5 Stunden bei 120 °C, wobei vollständige Umsetzung erzielt wurde. Daraufhin verdünnte man den Reaktionsansatz bei 100 °C mit 1000 ml Wasser von 80 °C und ließ abkühlen. Die Lösung enthielt die Verbindung der Formel

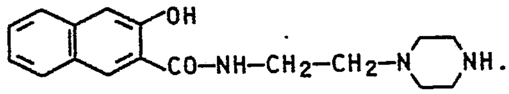

Beispiel 15

Die Lösung des Diazoniumsalzes, die auf übliche Weise aus 20 g 4-Aminoazobenzol erhalten wurde, ließ man bei 0 - 5 °C langsam in 150 ml der nach Beispiel 14 erhaltenen Lösung der Kupplungskomponenten unter Zusatz von 500 g Eis und 25 g Natriumcarbonat einfließen. Nach beendeter Kupplung wurde der so erhaltene Farbstoff durch Absaugen, Nachwaschen mit Wasser und Trocknen bei 70 °C unter vermindertem Druck isoliert. Das dunkelbraune Pulver löste sich in Wasser unter Zusatz von Essigsäure mit roter Farbe. Auf Papier wurden damit rote Färbungen erhalten, deren Abwässer farblos waren.

Mit der Kupplungskomponente aus Beispiel 14 wurden weitere Farbstoffe analog Beispiel 15 hergestellt. In der folgenden Tabelle 2 sind die jeweiligen Diazokomponenten sowie der Farbton, den man erzielt, wenn man Papier mit dem jeweils resultierenden Farbstoff ausfärbt, angegeben.

Tabelle 2

| Bsp.-Nr. | Diazokomponente | Farbton der Papier-Ausfärbung |
|---|---|---|
| 16 | 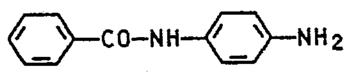 | rot |
| 17 | 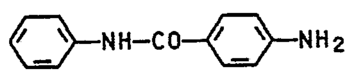 | scharlachrot |
| 18 | 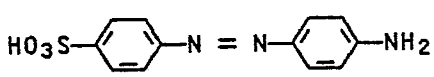 | rot |
| 19 | 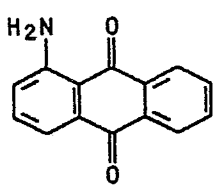 | rot |
| 20 | 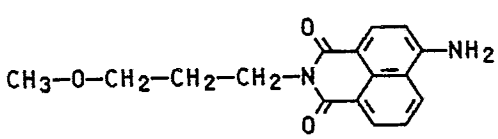 | bordorot |

Tabelle 2 (Forts.)

| Bsp.-Nr. | Diazokomponente | Farbton der Papier-Ausfärbung |
|---|---|---|
| 21 | 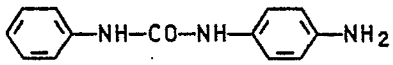 | bordorot |
| 22 | 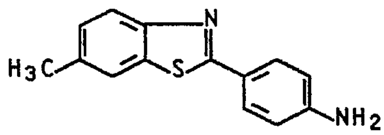 | rot |
| 23 | 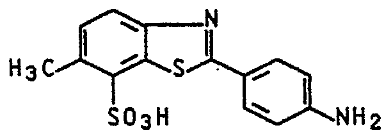 | rot |
| 24 | 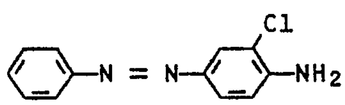 | rot |
| 25 | 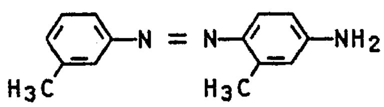 | rot |
| 26 | 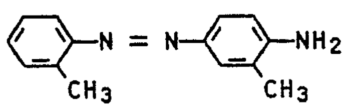 | rot |
| 27 | 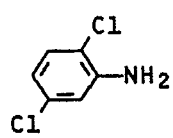 | orange |
| 28 | 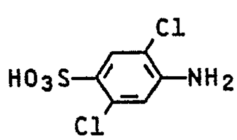 | orange |

Beispiel 29

Eine Mischung aus 130 g N-(2-Aminoethyl)piperazin, 150 ml Isobutanol und 113 g 2-Chlor-3-cyano-4-methyl-6-(2'-methoxyethyl-amino)pyridin wurden unter Abdestillieren des Isobutanols innerhalb einer Stunde auf 145 °C erhitzt und weitere 2 Stunden bei dieser Temperatur gerührt. Nach vollständiger Umsetzung verdünnte man den Ansatz durch Zugabe von 800 ml 30 %iger Essigsäure. Das Reaktionsprodukt hat die Formel

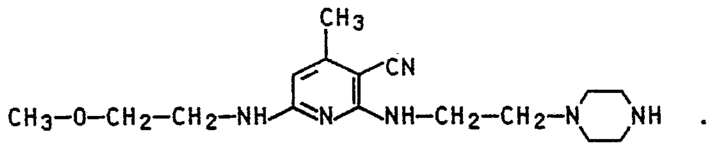

Beispiel 30

In die Lösung des Diazoniumsalzes, das nach an sich bekannter Weise aus 20 g 4-Aminoazobenzol erhalten wurde, ließ man bei 5 - 10 °C 240 ml der nach Beispiel 29 hergestellten Lösung der Kupplungskomponente einfließen. Durch anschließende Zugabe von 100 ml 55 %iger Natriumacetat-Lösung stellte man das Kupplungsgemisch auf einen pH-Wert von 4 ein. Nach beendeter Kupplung fügte man zur besseren Isolierbarkeit des Farbstoffes 100 ml 50 %ige Natronlauge hinzu. Nach Absaugen, Waschen mit Wasser und Trocknen bei 80 °C unter vermindertem Druck erhielt man ein orangefarbenes Pulver, das in verdünnter Essigsäure leicht löslich war. Mit dem so erhaltenen Farbstoff der Formel

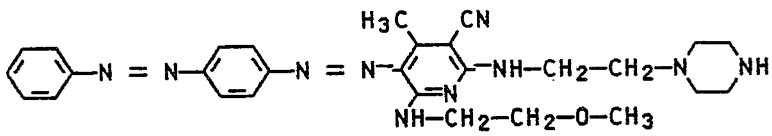

wurden auf Papier farbstarke Orange-Färbungen erhalten, deren Abwasser farblos war.

Mit der Kupplungskomponente aus Beispiel 29 wurden weitere Farbstoffe analog Beispiel 30 hergestellt. In der folgenden Tabelle 3 sind die jeweiligen Diazokomponenten sowie der Farbton, den man erzielt, wenn man Papier mit dem jeweils resultierenden Farbstoff ausfärbt, angegeben.

Tabelle 3

| Bsp.-Nr. | Diazokomponente | Farbton der Papier-Ausfärbung |
|---|---|---|
| 31 | 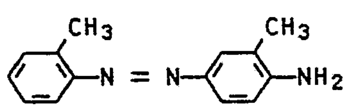 | orange |
| 32 | 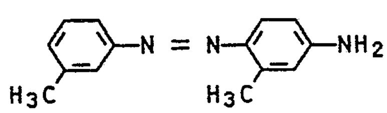 | orange |

Tabelle 3 (Forts.)

| Bsp.-Nr. | D i a z o k o m p o n e n t e | Farbton der Papier-Ausfärbung |
|---|---|---|
| 33 | 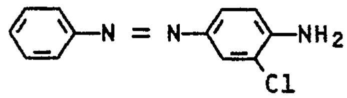 | orange |
| 34 | 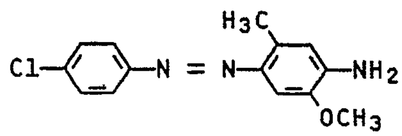 | rot |
| 35 | 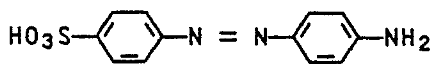 | orange |
| 36 | 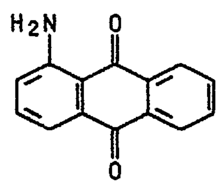 | braun-orange |
| 37 | 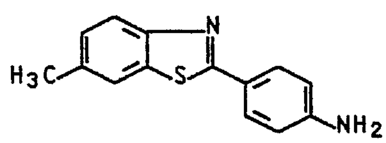 | gelb |
| 38 | 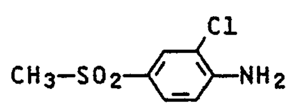 | gelb |
| 39 | 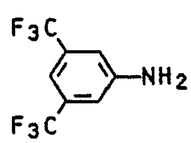 | gelb |

Beispiel 40

Zu 94 g 2,6-Dichlor-3-cyano-4-methylpyridin in 150 ml Isobutanol ließ man 155 g N-(2-Aminoethyl)-piperazin langsam einfließen, wobei die Temperatur von 23 °C bis auf 110 °C anstieg. Man brachte dann die Innentemperatur innerhalb einer Stunde auf 145 °C unter Abdestillieren des Isobutanols und rührte noch 1 Stunde bei 145 °C.

Man fügte dann bei 100 °C 700 ml 30 %ige Essigsäure hinzu und ließ die Lösung abkühlen. Sie enthielt die Kupplungskomponente der Formel

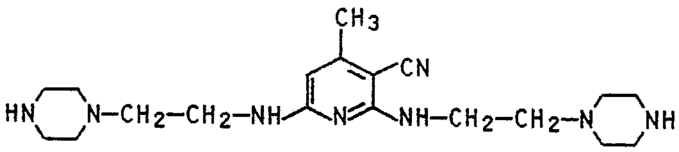

Mit dieser Kupplungskomponente und den in Tabelle 4 angegebenen Diazokomponenten wurden Farbstoffe hergestellt. Die jeweils resultierenden Farbtöne der Papier-Ausfärbung sind ebenfalls angegeben.

Tabelle 4

| Bsp.-Nr. | Diazokomponente | Farbton der Papier-Ausfärbung |
|---|---|---|
| 41 | 4-Aminoazobenzol | orange |
| 42 | 1-Aminoanthrachinon | orange |
| 43 | 3,6-Dimethoxy-4-aminoazobenzol | braunrot |
| 44 | 4'-Chlor-3-methoxy-6-methyl-4-aminoazobenzol | orange |
| 45 | 4-Aminonaphtalsäure-3'-methoxypropylimid | rot |
| 46 | 2-(4'-Aminophenyl)-6-methylbenzthiazol | gelb |
| 47 | 4,4'-Diaminobenzophenon | gelb |
| 48 | 4,4'-Diaminoazobenzol | rotbraun |
| 49 | 4,4'-Diaminodiphenylsulfon | gelb |

Beispiel 50

Zur Lösung von 20 g 2-Amino-3-cyano-4-methylthiophen-5-carbonsäuremethylester in 100 ml Eisessig und 40 ml Propionsäure wurden bei 0 - 5 °C 32 g Nitrosylschwefelsäure hinzugetropft und anschließend eine Stunde bei gleicher Temperatur weitergerührt. In das so erhaltene Diazotierungsgemisch ließ man die Mischung aus 220 ml der nach Beispiel 29 erhaltenen Lösung der Kupplungskomponente, zusammen mit 100 Volumenteilen Eisessig und 250 ml 30 %iger Essigsäure bei 0 - 5 °C einfließen. Das Kupplungsprodukt wurde abgesaugt, zunächst mit Methanol und dann mit Wasser gewaschen und bei 70 °C unter vermindertem Druck getrocknet. Der resultierende dunkelrote Farbstoff, der der Formel

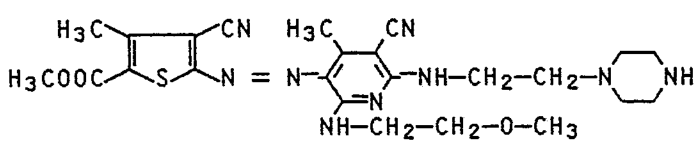

entspricht, löste sich in Wasser unter Zusatz von Essigsäure mit roter Farbe und färbte Papier in

farbstarken und klaren Rot-Tönen, wobei das Abwasser farblos blieb.

Beispiel 51

Man verfuhr analog Beispiel 50, setzte jedoch als Kupplungskomponente, 180 ml der Lösung ein, wie sie nach Beispiel 40 erhalten wurde. Es resultierte ein Farbstoff, dessen essigsaure, wäßrige Lösungen auf Papier farbstarke und klare Rot-Färbungen erzeugten. Der Farbstoff besitzt die Formel

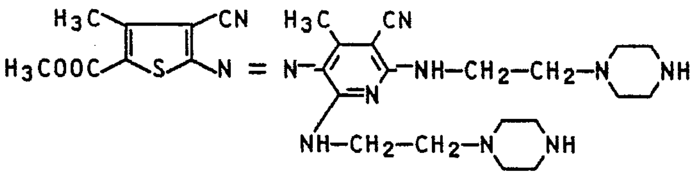

Beispiel 52

25 g des nach Beispiel 50 erhaltenen Farbstoffs wurden zusammen mit 300 ml Chloroform, 5 g Magnesiumoxid und 25 g Dimethylsulfat 24 Stunden unter Rückfluß gerührt. Daraufhin wurden die festen Reaktionsprodukte abgesaugt, mit Aceton gewaschen und bei 70 °C getrocknet. Man erhielt den reinen Farbstoff (frei von Magnesiumsalzen), als man das getrocknete Produkt in 1500 ml Wasser unter Zusatz von 100 ml Eisessig heiß löste und der heiß filtrierten Lösung 60 g Natriumtetrafluoroborat zusetzte. Der resultierende Niederschlag wurde nach dem Erkalten abgesaugt, mit wenig Wasser gewaschen und bei 70 °C unter vermindertem Druck getrocknet. Das so erhaltene dunkelrote Pulver enthält als Hauptprodukt den Farbstoff der Formel

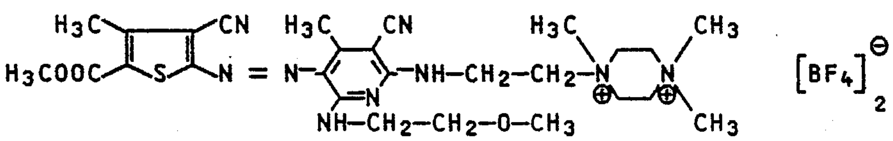

Es löste sich in Wasser mit roter Farbe und gab auf Papier farbtonreine Rot-Färbungen.

Beispiel 53

In die aus 12,6 g 3,3'-Dichlorbenzidin auf an sich bekannte Weise erhaltene Lösung des Tetrazoniumsalzes ließ man 240 ml der nach Beispiel 29 erhaltenen Lösung der Kupplungskomponente bei 0 - 5 °C einfließen und setzte anschließend noch 50 ml 55 %ige Natriumacetat-Lösung hinzu.

Nach beendeter Kupplung stellte man mit Natronlauge einen pH-Wert von 6 ein und isolierte das Kupplungsprodukt durch Absaugen und Waschen mit Wasser. Nach dem Trocknen bei 80 °C unter vermindertem Druck erhielt man ein rotes Pulver, dessen essigsaure, wäßrige Lösung sehr farbstarke und farbtonreine Scharlachrot-Färbungen auf Papier ergibt. Der Farbstoff entspricht der Zusammensetzung

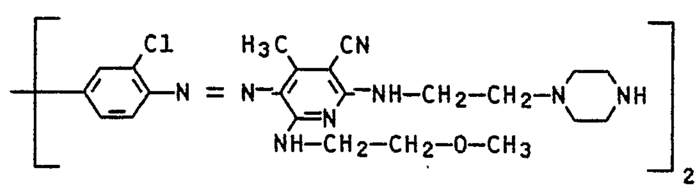

Auf analoge Weise wurden die in Tabelle 5 angegebenen Farbstoffe erhalten.

Tabelle 5

| Bsp.-Nr. | | Farbton der Papier-Ausfärbung |
|---|---|---|
| 54 | 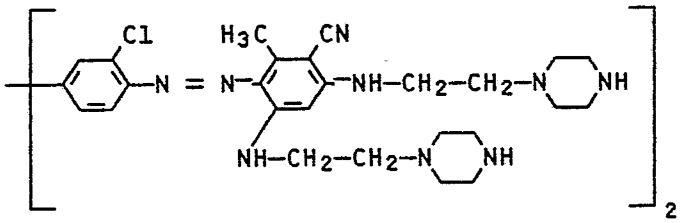 | scharlachrot |
| 55 | 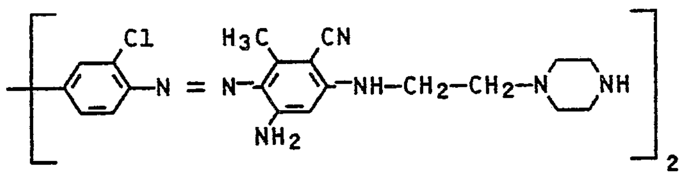 | orange |
| 56 | 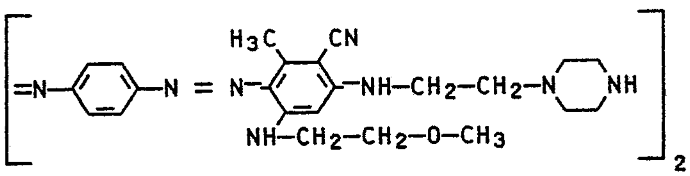 | rotbraun |
| 57 | 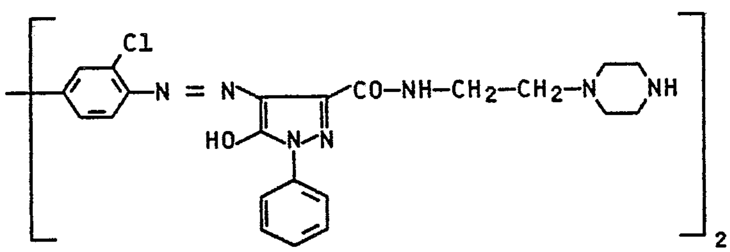 | orange |

Tabelle 5 (Forts.)

| | | |
|---|---|---|
| 58 | 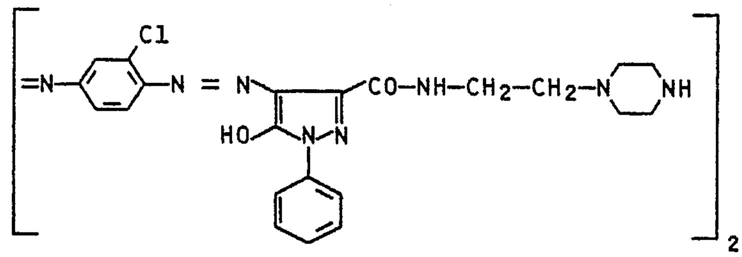 | rotbraun |
| 59 | 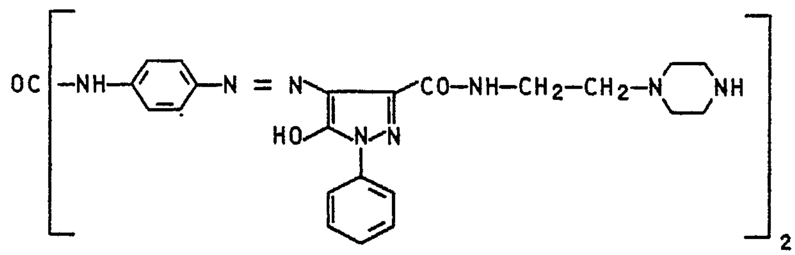 | orangerot |

Beispiel 60

Eine Mischung aus 22 g des nach Beispiel 63 erhaltenen Kupplungsproduktes, 200 ml N-Methylpyrrolidon, 5 g Magnesiumoxid und 25 g Dimethylsulfat wurde 7 Stunden bei 100 °C gerührt. Der Reaktionsansatz wurde in 4000 ml Wasser eingerührt. Nach Zusatz von 150 ml Eisessig fällte man den methylierten Farbstoff durch Hinzufügen von 100 g Natriumtetrafluoroborat aus, saugte ihn ab, wusch mit wenig Wasser nach und trocknete bei 70 °C unter vermindertem Druck. Man erhielt ein braunviolettes Pulver, dessen wäßrige Lösungen auf Papier farbstarke Violett-Färbungen ergaben.

Beispiel 61

48,5 g des nach an sich bekannten Verfahren erhaltenen Kupferphthalocyanintetrasulfonsäurechlorids wurden in Form einer wäßrigen Paste in die Mischung aus 1000 g Eis und 130 g N-(2-Aminoethyl)piperazin eingetragen. Nach mehrstündigem Rühren wurde das Umsetzungsprodukt durch Absaugen, Waschen mit Wasser und Trocknen bei 80 °C unter vermindertem Druck isoliert. Das so erhaltene blaue Pulver löste sich in Wasser unter Zusatz von Essigsäure. Mit diesen Lösungen wurden auf Papier klare Türkisblau-Färbungen erhalten.

Beispiel 62

Die aus 10,6 g 4,4'-Diaminobenzophenon nach an sich bekannter Weise erhaltene Lösung des Tetrazoniumsalzes ließ man bei 0 - 5 °C in die Mischung aus 150 ml der nach Beispiel 14 erhaltenen Lösung der Kupplungskomponente, 500 g Eis und 25 g Soda einfließen. Der so erhaltene Farbstoff färbte (nach Isolieren und Trocknen) Papier aus essigsaurer, wäßriger Lösung in klaren Rottönen.

Auf analoge Weise werden mit der genannten Kupplungskomponente und den in Tabelle 6 aufgeführten Diazokomponenten Farbstoffe erhalten. Die resultierenden Farbtöne der Papier-Ausfärbung sind ebenfalls angegeben.

Tabelle 6

| Bsp.-Nr. | Diazokomponente | Farbton der Papier-Ausfärbung |
|---|---|---|
| 63 | 4,4'-Diaminodiphenylharnstoff | violett |
| 64 | 4,4'-Diaminodiphenylsulfon | scharlachrot |
| 65 | 4-Aminobenzoyl-4'-aminoanilid | bordorot |
| 66 | 4,4'-Diaminoazobenzol | violett |
| 67 | 3,3'-Dichlorbenzidin | violett |

Beispiel 68

In die aus 20 g 4-Aminoazobenzol nach bekanntem Verfahren erhaltene wäßrige Lösung des Diazoniumsalzes ließ man bei 0 - 5 °C die Lösung von 28,6 g 6-Amino-4-methyl-3-cyano-2-(2'-piperazinylethylamino)pyridin, wie sie analog Beispiel 29 aus 6-Amino-4-methyl-3-cyano-2-chlorpyridin und N-(2-Aminoethyl)piperazin hergestellt wurde, einfließen und fügte noch 100 ml einer 55 %igen Natriumacetat-Lösung hinzu. Nach beendeter Kupplung wurde der Farbstoff durch die Zugabe von 50 ml einer 20 %igen Ammoniak-Lösung vollständig ausgefällt, abgesaugt, mit Wasser gewaschen und bei 80 °C unter vermindertem Druck getrocknet. Man erhielt damit farbstarke orangegelbe Papier-Färbungen.

Auf analoge Weise werden mit der genannten Kupplungskomponente und den in Tabelle 7 aufgeführten Diazokomponenten Farbstoffe erhalten. Die resultierenden Farbtöne der Papier-Ausfärbung sind ebenfalls angegeben..

Tabelle 7

| Bsp.-Nr. | Diazokomponente | Farbton der Papier-Ausfärbung |
|---|---|---|
| 69 | 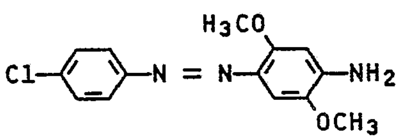 | rot |
| 70 | 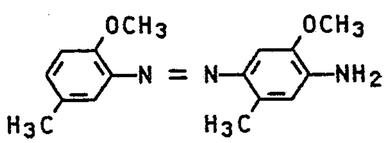 | rot |

Tabelle 7 (Forts.)

| Bsp.-Nr. | Diazokomponente | Farbton der Papier-Ausfärbung |
|---|---|---|
| 71 | 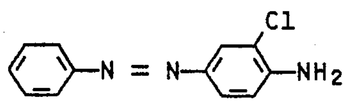 | orange |
| 72 | 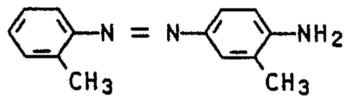 | gelborange |
| 73 | 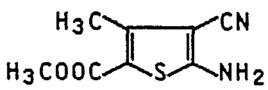 | rotorange |
| 74 | 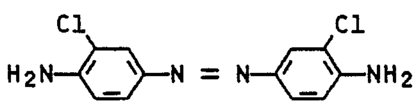 | orange |
| 75 | 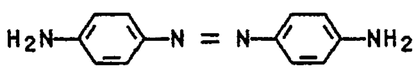 | orangebraun |

Beispiel 76

21 g des Farbstoffs der Formel

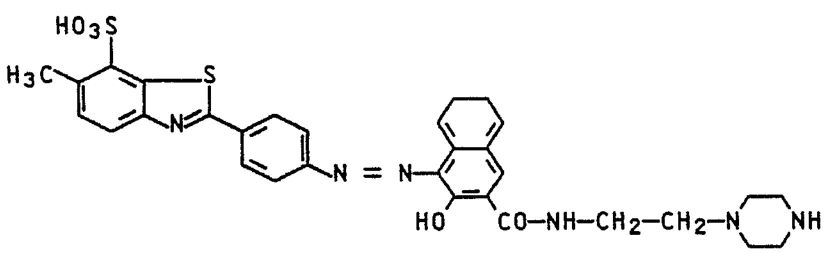

wurden in 200 ml N-Methylpyrrolidon unter Zusatz von 5 g Magnesiumoxid und 25 g Dimethylsulfat 6 Stunden bei 110 °C gerührt. Nach Erkalten wurde das Reaktionsgemisch in 1500 ml Aceton unter Rühren eingetragen. Das so gefällte Methylierungsprodukt wurde mit Aceton gewaschen und bei 70 °C getrocknet. Man erhielt damit farbstarke Rot-Färbungen auf Papier.

Beispiel 77

Das gemäß Beispiel 29 erhaltene Diaminopyridin-Derivat wurde nach vollständigem Umsatz in 500 ml N-Methylpyrrolidon gelöst und durch Zusatz von 250 g Dimethylsulfat und 50 g Magnesiumoxid methyliert. Das so erhaltene Reaktionsgemisch wurde für Kupplungen eingesetzt. So wurde ein Teil des

Reaktionsgemisches, der 64 g der methylierten Kupplungskomponente enthielt, in die nach an sich bekannter Weise erhaltene Lösung der Tetrazonium-Verbindung von 3,3'-Dichlorbenzidin bei 0 - 5 °C eingetropft. Anschließend stellte man dâs Kupplungsgemisch durch Zugabe einer 55 %igen Natriumacetat-Lösung auf einen pH-Wert von 5,3 und isolierte den Farbstoff der Formel

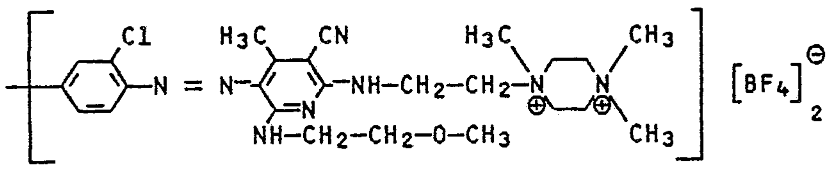

Man erhielt damit farbstarke und brillante rotorange Töne auf Papier.

Beispiel 78

20 g des nach Beispiel 15 erhaltenen Farbstoffs wurden zusammen mit 300 ml Chloroform, 5 g Magnesiumoxid und 38 g Dimethylsulfat 15 Stunden unter Rückflußbedingungen gerührt. Nach Erkalten saugte man das Festprodukt ab, wusch mit Chloroform und trocknet bei 70 °C unter vermindertem Druck. Das erhaltene Pulver enthielt neben Magnesiumsalzen den Farbstoff der Formel

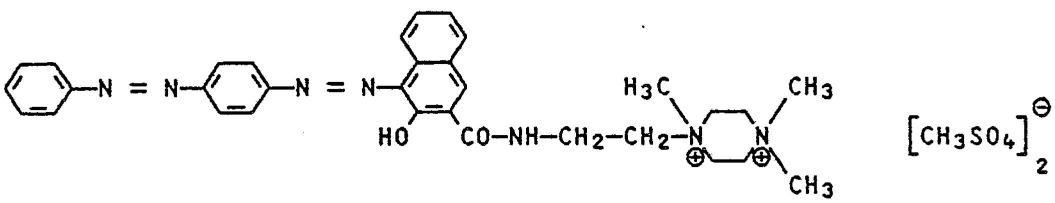

Beispiel 79

Die Mischung von 38 g Bromaminsäure, 500 ml Wasser, 32 g N-(2-Aminoethyl)piperazin und 1 g Kupfer-(I)-chlorid wurde mehrere Stunden bei 80 °C gerührt, bis vollständige Umsetzung eingetreten war. Der durch Absaugen, Waschen mit Wasser und Trocknen bei 80 °C unter vermindertem Druck isolierte Farbstoff ist ein blaues Pulver, dessen essigsaure, wäßrige Lösungen blaue Färbungen auf Papier ergaben. Er entspricht der Formel

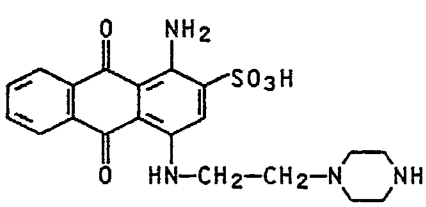

## Ansprüche

1. Farbstoffe der Formel I
$F[(-Y)_q-X]_p\ (A)_{m+n}$ (I),
in der
m und n gleich oder verschieden sind und unabhängig voneinander jeweils 0 oder 1,
p 1 oder 2,

q 0 oder 1,
F einen Farbstoffrest,
X einen Rest der Formel II oder III

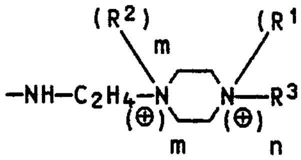

(II)

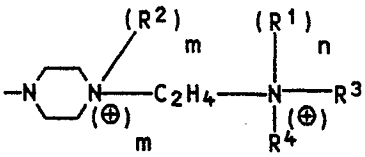

(III),

wobei $R^1$, $R^2$, $R^3$ und $R^4$ gleich oder verschieden sind und unabhängig voneinander jeweils für Wasserstoff, $C_1$-$C_4$-Alkyl oder Benzyl stehen und m und n jeweils die obengenannte Bedeutung besitzen,
Y eine Carbonyl-oder Sulfonylgruppe und
A ein Anion bedeuten.

2. Farbstoffe der Formel I gemäß Anspruch 1, dadurch gekennzeichnet, daß F den Farbstoffrest eines Azofarbstoffs bedeutet.

3. Farbstoffe der Formel I gemäß Anspruch 1, dadurch gekennzeichnet, daß F den Farbstoffrest eines Phthalocyaninfarbstoffs bedeutet.

4. Farbstoffe der Formel I gemäß Anspruch 1, dadurch gekennzeichnet, daß $R^1$, $R^2$, $R^3$ und $R^4$ jeweils Wasserstoff oder Methyl bedeuten.

5. Farbstoffe der Formel I gemäß Anspruch 1, dadurch gekennzeichnet, daß m und n jeweils 0 bedeuten.

6. Verwendung der Farbstoffe gemäß Anspruch 1 zum Färben von Papier.

BASF Aktiengesellschaft

BASF

BASF Aktiengesellschaft · D-6700 Ludwigshafen

50150

Europäisches Patentamt
Erhardtstraße 27

D-8000 München 2

BRD

EPA · EPO · OEB
MÜNCHEN
Empfang bestätigt
Receipt acknowledged
Accuse reception
AB

24. März 1988
Patentabteilung-C6
ZSP/B - Ws50103
Dr. Karg
Tel. 0621/60 43895
Telex 17 62 157 170
Ttx 62 157 170=BASF
Fax 0621/60 43123

EP-Anmeldung Nr. 88 103 160.3 - O.Z. 0050/39010

Wie wir leider erst jetzt bemerkten, wurde in der Formel III auf den Seiten 1, 17 und 18 der Index "n" an der positiven Ladung nicht aufgeführt.

Wir bitten, dieses Versehen zu entschuldigen und fügen als Anlage die entsprechend korrigierten Austauschseiten bei.

EPA EPO-OEB
DG 1
Reçu:
01-04-1988
03 | ANL. ZEICHN.

BASF Aktiengesellschaft

i.A. Karg

i.A. Karg
AV 3224

Anlage 3fach